# EUROPEAN PATENT SPECIFICATION

(11) **EP 1 371 292 B1**
(45) Date of publication and mention of the grant of the patent: **21.02.2007**
(21) Application number: 03013143.7
(22) Date of filing: 11.06.2003
(51) Int. Cl.: A21D 2/18, A21D 13/08, A21D 13/00

(54) **Method for improving dough suitable for making bread and doughnuts**
Verfahren zur Verbesserung von Teig für Brot oder Krapfen
Procédé pour améliorer la pâte à pain ou la pâte à beignets

(30) Priority: 11.06.2002 JP 2002170450
(43) Date of publication of application: 17.12.2003
(73) Proprietor: Kibun Food Chemifa Co., Ltd., Chuo-ku, Tokyo 105-0042 (JP)
(72) Inventor: Takahashi, Toshihiro, Kibun Food Chemifa Co., Ltd., Tokyo 104-8553 (JP); Sugitani, Hiromi, Kibun Food Chemifa Co., Ltd., Tokyo 104-8553 (JP)
(74) Representative: Zimmermann, Gerd Heinrich

(56) References cited:
- EP-A- 1 010 370
- US-A- 4 481 222
- US-A- 4 664 932
- US-A- 5 759 607
- PATENT ABSTRACTS OF JAPAN vol. 2000, no. 15, 6 April 2001 (2001-04-06) -& JP 2000 333590 A (OKUNO CHEM IND CO LTD), 5 December 2000 (2000-12-05)
- DATABASE WPI Section Ch, Week 197933 Derwent Publications Ltd., London, GB; Class D11, AN 1979-60536B XP002251339 & JP 54 084049 A (FREUNT SANGYO KK), 4 July 1979 (1979-07-04)
- DATABASE WPI Section Ch, Week 198309 Derwent Publications Ltd., London, GB; Class D11, AN 1983-20735K XP002251340 & JP 58 009641 A (SAN-EI CHEM IND LTD), 20 January 1983 (1983-01-20)
- DATABASE WPI Section Ch, Week 199423 Derwent Publications Ltd., London, GB; Class D11, AN 1994-187870 XP002251341 & JP 06 125692 A (KUMAMOTO SEIFUN KK), 10 May 1994 (1994-05-10)

## Description

This invention relates to an agent for improving dough suitable for making bread and doughnuts.

Bread or doughnuts which are fresh after baking or frying have protein and starch tissues yet to be completely solidified and contain a large amount of water vapor. Therefore, it is bent and broken after baking or frying in the event, above all, that they are made of soft dough.

If they are sliced, cut or otherwise worked on by a machine without having heat removed satisfactorily after baking or frying, they are crushed, or bent and broken in their cut section. Therefore, they have an extremely low commercial value if they are sliced or cut within a short time after baking or frying. A large loss occurs particularly to bread for sandwiches having its crust cut away, and bread fresh from the oven has an extremely low commercial value since it is crushed easily when used for making sandwiches. Accordingly, it is essential to allow bread to stand for a sufficiently long time to cool before it is sliced or cut by a machine, but it results in an undesirably time-consuming process.

Bread giving a soft and glutinous mouthfeel has recently come to be strongly liked. Such bread contains a large amount of gelatinized starch in its dough, since it is made by adding a mixture of flour and hot water and starch. Therefore, it is very often the case that dough is so soft as to be deformed to lose shape easily, and that bread tends to be crushed, or deformed in its cut section, even if it may be sliced or cut after having its heat removed satisfactorily. Accordingly, there has been an undesirable tendency toward a large loss of products and a reduction of their commercial value.

A number of methods have been proposed for preventing bread from breaking down easily. They include the addition of cane sugar fatty acid ester, amylase and protease (JP-A-5-168394), the addition of 0.3 to 5% by weight of wheat protein to wheat flour (JP-A-11-42044), the addition of a whey protein concentrate and calcium (JP-A-2002-119196) and the use of classified soft flour having an average grain diameter not exceeding 20 microns (JP-A-2000-157148). The method employing enzymes has, however, failed to produce satisfactory results depending conditions of bread making, and the methods of adding proteins have often resulted in bread which is too strong against a pulling force to give a pleasant mouthfeel. The application of any proposed method to soft bread of the type which has recently come to be liked has not proven successful in preventing bread from being bent or broken with the passage of time and making an improved product which can be sliced soon after baking.

US-A-4 481 222 relates to dry mixes which are useful in the provision of yeasty baked goods without undergoing dough working or lengthy dough fermentation steps. Such mixes comprise flour having an average vital gluten content of at least about 5% by weight. With other words, this document aims eliminating kneading of the dough and at shortening the process of producing breads.

JP-A-2000 333590 discloses a food quality improver enabling bread and confectionary which has a high restoring force and a excellent melting feeling in the mouth.

EP-A-1 010 370 is concerned with an oil absorption retarder containing alginic ester and fried foods produced by using the oil absorption retarder. The oil absorption retarder disclosed in this document can efficiently retard oil absorption during frying, which results in providing fried foods with lowered oil contents.

US-A-4 664 932 discloses a quality improver for frozen doughs. This invention aims to inhibit the quality deteriorations caused during the storage in frozen dough to a minimum through the improvement in the properties of gluten in the frozen dough in order to make the quality deteriorations during freezing as little as possible.

JP-A-54 084 049 discloses the use of a powdered composition comprising polyethylene glycol alginate to improve the texture of bread dough.

US-A-5 759 607 relates to a method which uses propylene glycol alginate to improve the texture of food compositions. Pasta is provided which exhibits improved texture retention after refrigeration or freezing. According to this document, the use of propylene glycol alginate allows the use of non-wheat flours, such as oat flour, corn flour, corn starch, pea flour, lima bean flour, soybean flour, and navy bean flour in the production of pasta-like foods.

None of the afore mentioned documents of the state of the art addresses the problems related to slicing or cutting freshly baked bread.

It is therefore an object of the present invention to provide a process for making bread and doughnuts which overcomes or at least lessens the drawbacks of prior art approaches. This object is solved by the method according to independent claim 1, and the use of alginic acid ester according to independent claim 8. Further advantageous features, aspects and details of the invention are evident from the dependant claims, the description and the figures. The claims are to be understood as a first non-limiting approach to define the invention in general terms.

The present invention relates to bread and doughnuts which are not crushed, bent or broken after baking or frying when sliced or cut by a machine in their fresh state still containing heat and water vapour after baking or frying, or when used for making sandwiches, etc.

In another aspect of the invention there is provided a method for preparing improved dough for making bread or doughnuts which are not crushed, bent or broken when sliced or cut by a machine in their fresh state still containing heat and water vapour after baking or frying.

In yet another aspect of the present invention, there are provided bread and doughnuts of high mechanical resistance and shape retaining ability. The mechanical resistance of bread means its property is unlikely to break by deformation or bending the use of an alginic acid ester when it is sliced or cut by a machine.

As a result of our research efforts, the inventors of this invention, have found that the above objects and aspects of the invention are attained by using an alginic acid ester as an agent suitable for making bread and doughnuts.

According to one aspect of this invention, therefore, there is the use of an alginic acid ester for improving dough for bread and doughnuts which comprises an alginic acid ester which may be accompanied by one or more constituents selected from among polysaccharides, saccharides, fibers, starches, proteins, dairy products, calcium-containing agents, pH adjustors, emulsifiers, enzymes and other foodstuffs.

According to another aspect of this invention, there is provided a method of making bread or doughnuts which comprises adding the agent for improving dough as defined above. The method of this invention makes it possible to produce bread or doughnuts which are not easily bent or broken, but have an improved shape retaining ability and give an improved mouthfeel. The method of this invention also makes it possible to produce bread or doughnuts which are sufficiently high in mechanical resistance to withstand slicing or cutting within 120 minutes after baking or frying. According to still another aspect of this invention, therefore, there is provided a method of making bread or doughnuts which comprises baking or frying dough containing the agent as defined above and slicing or cutting the baked or fried product within 120 minutes after baking or frying.

According to a further aspect, there is provided bread or doughnuts made by any method according to this invention as defined above. The bread or doughnuts preferably contains an alginic acid ester in the amount of at least 0.01%, more preferably 0.01 to 50.0% and still more preferably 0.10 to 10.0% by weight relative to wheat flour.
Fig. 1 is an illustration of bread samples made and tested under the conditions as stated in Example 1.
Fig. 2 is an illustration of bread samples made and tested under the conditions as stated in Example 2.
Fig. 3 is an illustration of bread samples made and tested under the conditions as stated in Example 3.

The method for improving dough according to this invention and a method of using alginic acid ester will now be described in detail. Every pair of values before and after "to" used herein for indicating a particular range indicate the range including the both ends figure as the lower and upper limits, respectively.

The method for improving dough according to this invention uses an alginic acid ester as its essential constituent. The term alginic acid ester as herein used means a compound having a structure formed by transforming at least a part of carboxyl groups constituting alginic acid into an ester. It is not specifically limited in the degree of esterification. A preferred example of alginic acid ester is propylene glycol alginate.

The alginic acid ester which can be used for the purpose of this invention is not specifically limited in its average molecular weight or molecular weight distribution, but preferably has a viscosity of 1.0 to 1000.0 mPa·s and more preferably of 3.0 to 600.0 mPa·s as measured in a 1% solution at 20°C by a B type viscometer. The alginic acid ester is not specifically limited in its rawmaterial or method of preparation. Therefore, the alginic acid which can be used for the purpose of this invention may be a natural or synthesized product.

An alginic acid ester is easy to obtain if alginic acid is esterified by a known method. High-molecular alginic acid is abundant among the cells of brown algae. Therefore, high-molecular alginic acid can be obtained by washing brown algae with e.g. dilute sulfuric acid, extracting in a solution of sodium carbonate and precipitating with sulfuric acid. Such high-molecular alginic acid can be easily lowered in molecular weight by any known method, for example, by causing an enzyme to act upon high-molecular alginic acid, reacting it with an oxidizing and reducing agent, etc. , or decomposition under heat or pressure. The resulting alginic acid can be subjected a customary process of esterification to give an alginic acid ester.

The alginic acid which can be used for the purpose of this invention is not specifically limited in the proportions of β-D-mannuronic acid and α-L-gluronic acid or the order of their arrangement. Therefore, it is possible to use one having all of a block consisting solely of β-D-mannuronic acid, a block consisting solely of α-L-gluronic acid and a block of their mixture, or one having one or two of those kinds of blocks.

The method of this invention may employ one or more kinds of alginic acid esters. The alginic acid ester may have a functional group or a crosslinked structure to the extent not hindering any effect expected from the ester.

The method of this invention employing an alginic acid ester may employ any amount of any other constituent to the extent not seriously hindering any effect expected from the ester. It may contain, for example, one or more of polysaccharides, saccharides, fibers, starches, proteins, dairy products, calcium-containing agents, pH adjustors, emulsifiers, enzymes and other foodstuffs.

As polysaccharides a wide range of natural gums and processed products thereof may be suitably used in the invention. Preferred examples thereof include alginic acid, alginates, hyaluronic acid, cassia gum, carrageenan, mannan, pectin, pullulan, locust bean gum, xanthane gum, guargum, agar, curdlan, tamarind gum, gum arabic, gum tragacanth, furcellaran, gellan gum, psyllium gum, karaya gum, chitin and chitosan.

Preferred examples of the saccharides include monosacchrides such as grape or fruit sugar, disaccharides such as cane, milk or malt sugar, sugar alcohols such as maltitol or sorbitol, oligosaccharides, hydrolyzed products of starch and isomerized sugars.

Preferred examples of the fibers include soybean food fibers (bean-curd waste), celluloses, microcrystalline celluloses, methyl cellulose and carboxymethyl cellulose. Soybean food fibers are preferably added as dry bean-curd waste.

The starches which may be employed include a wide range of starches or chemically processed starches which are usually employed in food. Preferred examples are waxy corn starch, potato starch, tapioca starch, wheat starch and chemically processed starches obtained by e.g. organic acid esterification, phosphoric acid crosslinking, etherification, conversion to α-starches or hydrolysis.

As proteins, a wide range of proteins which are usually employed in food can be used in this prevention. Preferred examples are animal and vegetable proteins such as soybean protein, wheat gluten, egg albumen and gelatin.

The dairy products suitably used are milk and associated products, as well as partially refined or processed products thereof. Preferred examples thereof are skim milk, whey protein, casein and sodium caseinate.

The calcium-containing agents suitably used in this invention include a wide range of natural calcium and burned or processed products thereof. Preferred examples are burned calcium, calcium chloride, calcium carbonate, calcium hydroxide and calcium phosphate.

The pH adjustors suitably used in the invention include a wide range of alkaline organic or inorganic acid salts and acids which are often used in food processing. Preferred examples of the alkaline salts are carbonates, phosphates, sodium citrate, sodium acetate, sodium ascorbate, sodium lactate and sodium sulfate.

Preferred examples of the acids are acetic, citric, gluconic, succinic, tartaric, fumaric and ascorbic acids.

The emulsifiers which may employed in this invention include a wide range of natural and synthetic emulsifiers which are often used in food processing. Preferred examples are lecithin, enzyme-treated lecithin, sorbitan fatty acid ester, cane sugar fatty acid ester, glyceride fatty acid ester, calcium stearoyl lactate and sodium stearoyl lactate.

The enzymes suitably used in the invention include a wide range of enzymes which are often used in food processing. Preferred examples are amylases, proteases and oxidation-reduction enzymes.

In addition to the substances above mentioned, the method of this invention may further employ food stuff covering all kinds of substances that can generally be used with food, including salt, spice, perfume, coloring matter, sweeteners, and souring and flavoring agents.

The method of this invention employing an alginic acid ester may employ any amount of any other constituent to the extent not seriously hindering any effect expected from the ester. It is, however, preferable to employ at least 0.01% of alginic acid ester, more preferably at least 1% and still more preferably 5 to 100% by weight when the amount of the whole agent is expressed as 100% by weight. Besides alginic acid ester, the method preferably employs an agent containing sugar alcohol, fibers, a calcium-containing agent, saccharides, proteins and dairy products among other constituents.

More specifically, the method preferably employs an agent containing sorbitol as sugar alcohol, calcium carbonate as a calcium-containing agent and dry bean-curd waste as fibers, when containing the alginic acid ester in the amount of 0.01 to 50%, more preferably 10 to 30% and still more preferably 20% by weight. The proportion of sorbitol is preferably from 1 to 90%, more preferably from 20 to 40% and still more preferably 30% by weight if 20% by weight of alginic acid ester are employed. The proportion of calcium carbonate is preferably from 1 to 90%, more preferably from 10 to 30% and still more preferably 20% by weight. The proportion of dry bean-curd waste is preferably from 1 to 90%, more preferably from 20 to 40% and still more preferably 30% by weight.

Still more specifically, the method preferably employs an agent containing sorbitol as sugar alcohol, calcium carbonate as a calcium-containing agent and dry bean-curd waste as fibers, when employing the alginic acid ester in the amount of 0.01 to 50%, more preferably 5 to 25% and still more preferably 15% by weight. The proportion of sorbitol is preferably from 1 to 90%, more preferably from 45 to 65% and still more preferably 55% by weight if 15% by weight of alginic acid ester are employed. The proportion of calcium carbonate is preferably from 1 to 90%, more preferably from 1 to 20% and still more preferably 10% by weight. The proportion of dry bean-curd waste is preferably from 1 to 90%, more preferably from 10 to 30% and still more preferably 20% by weight.

Still more specifically, the method preferably employs an agent containing maltitol as sugar alcohol, sodium caseinate as a dairy product and calcium carbonate as a calcium-containing agent, when employing the alginic acid ester in the amount of 0.01 to 50%, more preferably 10 to 30% and still more preferably 20% by weight. The proportion of maltitol is preferably from 1 to 90%, more preferably from 20 to 40% and still more preferably 30% by weight if 20% by weight of alginic acid ester are employed. The proportion of sodium caseinate is preferably from 1 to 90%, more preferably from 20 to 40% and still more preferably 30% by weight. The proportion of calcium carbonate is preferably from 1 to 90%, more preferably from 10 to 30% and still more preferably 20% by weight.

Still more specifically, the method preferably employs an agent containing maltitol as sugar alcohol, egg albumen as protein and calcium carbonate as a calcium-containing agent, when containing the alginic acid ester in the amount of 0.01 to 50%, more preferably 10 to 30% and still more preferably 20% by weight. The proportion of maltitol is preferably from 1 to 90%, more preferably from 20 to 40% and still more preferably 30% by weight for the agent containing 20% by weight of alginic acid ester. The proportion of egg albumen is preferably from 1 to 90%, more preferably from 20 to 40% and still more preferably 30% by weight. The proportion of calcium carbonate is preferably from 1 to 90%, more preferably from 10 to 30% and still more preferably 20% by weight.

The agent can be used by mixing with foodstuffs. It can effectively be used in, for example, food consisting mainly of wheat flour. The wheat flour may be any of soft, medium and hard flour made from ordinary wheat and usually in use.

The agent is preferably used for bread and doughnuts. It can be used for various kinds of bread including bread typically for toast, cooked bread, Chinese buns, hard-baked bread, sweet buns, steamed buns, muffins and bagels, and various kinds of yeast-leavened doughnuts as doughnuts. The bread typically for toast includes square bread, roaf-shaped bread, coupe, butter rolls, hamburger buns and bread used for making crumb.

The agent may be used by adding to a mixture of foodstuffs in an ordinary process for making bread or doughnuts. While there is no special timing for its addition, it is usually added when the other foodstuffs are mixed.

Bread and doughnuts may be made by employing various kinds of materials which are usually employed for making bread, etc., including yeasty food such as yeast, an ammonium salt, a calcium salt, an oxidizing agent, a reducing agent and a surface active agent, saccharides such as liquid sugar and starch, salt, oils and fats such as butter, shortening and lard, eggs, and dairy products such as milk, condensed milk and raw cream. The agent of this invention may be added to, for example, flour, eggs, salt, yeast or water in its powdery form, or as a mixture with water.

The agent is preferably employed in such an amount that the proportion of alginic acid ester may be at least 0.01%, more preferably from 0.01 to 50.0% and still more preferably from 0.10 to 10.0% by weight relative to flour.

Any of known methods including straight, internal leaven, liquid leaven and hot water kneading methods, or even a combination thereof can be used for making bread. For further details of methods, reference may be made to the later description of Examples.

The bread and doughnuts made by using the agent are characterized by their resistance to crushing, bending or breaking after baking or frying. They are not easily deformed, bent or broken even if they are sliced or cut when they are still fresh after baking or frying. They resist deformation or breaking effectively even if they are sliced or cut within 120 minutes after baking or frying, or even within 60 minutes thereafter. Moreover, they remain soft and elastic and retain shape excellently for a long time after slicing or cutting. Thus, the dough improving agent of this invention makes it possible to realize a great reduction in the time and cost as required for making bread and doughnuts, insofar as the bread and doughnuts made by using it can be sliced or cut within a short time after baking or frying.

The invention will now be described more specifically by reference to several Examples. The following description of the Examples is, however, not intended for limiting the scope of this invention, but alterations including ones covering materials, procedures, proportions and operation may be made without departing from the scope of this invention.

### Preparation:

Agent 1 was an alginic acid ester (Duckroyd of Kibun Food Chemifa Co., Ltd.) having a viscosity of 10 to 20 mPa·s as measured by a B type viscometer
Agent 2 was a mixture obtained by mixing in powder form 20% by weight of the above ester (of Kibun), 30% by weight of sorbitol, 30% by weight of dry bean-curd waste (Soyameal of Kibun Food Chemifa Co., Ltd.) and 20% by weight of calcium carbonate.
Agent 3 was a mixture obtained by mixing in powder form 15% by weight of the above ester (of Kibun), 55% by weight of sorbitol, 20% by weight of dry bean-curd waste (Soyameal of Kibun Food Chemifa Co., Ltd.) and 10% by weight of calcium carbonate.
Agent 4 was a mixture obtained by mixing in powder form 20% by weight of the above ester (of Kibun), 30% by weight of maltitol, 30% by weight of sodium caseinate and 20% by weight of calcium carbonate.
Agent 5 was a mixture obtained by mixing in powder form 20% by weight of the above ester (of Kibun), 30% by weight of maltitol, 30% by weight of egg albumen and 20% by weight of calcium carbonate.

### EXAMPLE 1

Samples of bread (for toast) were made by a straight method using a flour mixture giving a soft baked body.

**Table 1**

| (Bakers %) | | | | | |
|---|---|---|---|---|---|
| | Materials | Control sample | Test sample 1 | Test sample 2 | Test sample 3 |
| Flour mixture (Yudane) | Hard flour | 50.0 | 50.0 | 50.0 | 50.0 |
| | Hot water | 25.0 | 25.0 | 25.0 | 25.0 |
| Other materials | Hard flour | 50.0 | 50.0 | 50.0 | 50.0 |
| | Sugar | 5.0 | 5.0 | 5.0 | 5.0 |
| | Salt | 2.0 | 2.0 | 2.0 | 2.0 |
| | Skim milk | 2.0 | 2.0 | 2.0 | 2.0 |
| | Yeasty food | 0.1 | 0.1 | 0.1 | 0.1 |
| | Shortening | 5.0 | 5.0 | 5.0 | 5.0 |
| | Dry yeast | 1.5 | 1.5 | 1.5 | 1.5 |
| | Water | 40.0 | 40.0 | 40.0 | 40.0 |
| | Dough improving agent 1 | - | 0.2 | - | - |
| | Dough improving agent 2 | - | - | 1.0 | 2.0 |

Hard flour as shown in Table 1 was mixed with hot water for two minutes at a low speed and for another two minutes at a high speed and the mixture was left to stand in a refrigerator overnight to prepare a flour mixture. The mixture was allowed to return to 25°C, the other materials except shortening were mixed with the flour mixture for two minutes at a low speed and for six minutes at a medium speed, and thereafter shortening was added to it and mixed together for three minutes at a low speed, for six minutes at a medium speed and for two minutes at a high speed. A kneading temperature was 28°C. The resulting mixture was left to stand for a floor time of 40 minutes at 30°C, was degassed, was divided and was left to stand for a bench time of 25 minutes at room temperature. It was put in a mold, allowed to undergo 60 minutes of final proofing at 38°C (in a bread prover) and baked at 210°C for 35 minutes to make bread.

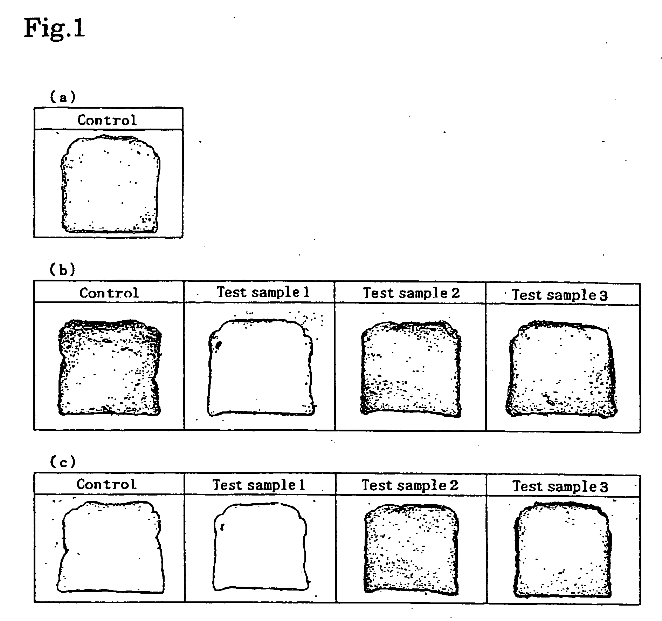

The baked bread was left to stand for 60 minutes. It still contained heat and water vapor. Then, bread was cut into slices each having a thickness of about 1.3 cm. Each bread as sliced showed the state as shown in Fig. 1B. Each sample was evaluated in four grades as explained below, and the results are shown in Table 2.
- Ⓞ:: No warping was observed.
- ○:: Hardly any warping was observed.
- Δ:: Some warping was observed.
- ×:: Serious warping was observed.

None of Test Samples 1 to 3 was undesirably warped by slicing, while Control Sample was warped.

Each sliced sample was wrapped in a vinyl sheet and left to stand for a total of one day after baking. Then, each sample represented the state as shown in Fig. 1C. Each sample was evaluated in four grades as explained below, and the results are shown in Table 2.
- Ⓞ:: No breakdown was observed.
- ○:: Hardly any breakdown was observed.
- Δ:: Some breakdown was observed.
- ×:: Serious breakdown was observed.

None of Test Samples 1 to 3 was undesirably broken down, while Control Sample was warped greatly and broken down. All of the Test Samples 1 to 3 that had been left for one day were found not to have any substantial difference from bread made from the same materials as Control Sample and sliced after it had been left for one day after baking (Fig. 1A) . Thus, it was confirmed that the dough improving agent of this invention can provide bread with high shape retention and mechanical resistance.

Each sample was evaluated for its soft feel and its property of melting in the mouth four hours after baking. It was graded by eight panelists on a scale of within +3 to -3 points as compared with zero point given to Control Sample not containing any dough improving agent and the average grading was as shown in Table 2. As a result, it was found that the agent of this invention can provide bread with improved soft feel and melting property in the mouth, and that the agent 2 was particularly effective.

**Table 2**

| | Warping - Breakdown (Immediately after slicing) | Warping - Breakdown (one day after slicing) | Soft feel Soft feel | Melting in the mouth |
|---|---|---|---|---|
| Control sample | Δ | × | 0.00 | 0.00 |
| Test sample 1 | ○ | ○ | 0.38 | 0.50 |
| Test sample 2 | Ⓞ | Ⓞ | 1.25 | 0.75 |
| Test sample 3 | Ⓞ | Ⓞ | 1.50 | 0.63 |

### EXAMPLE 2

Samples of bread (for toast) were made by a straight method using dough prepared by replacing a part of wheat flour with starch and giving a soft baked body.

**Table 3**

| (Bakers %) | | | | | |
|---|---|---|---|---|---|
| | Materials | Control sample | Test sample 4 | Test sample 5 | Test sample 6 |
| Materials | Hard flour | 90.0 | 80.0 | 90.0 | 80.0 |
| | Starch | 10.0 | 10.0 | 10.0 | 10.0 |
| | Sugar | 5.0 | 5.0 | 5.0 | 5.0 |
| | Salt | 2.0 | 2.0 | 2.0 | 2.0 |
| | Skim milk | 2.0 | 2.0 | 2.0 | 2.0 |
| | Yeasty food | 0.1 | 0.1 | 0.1 | 0.1 |
| | Shortening | 5.0 | 5.0 | 5.0 | 5.0 |
| | Dry yeast | 1.5 | 1.5 | 1.5 | 1.5 |
| | Water | 65.0 | 65.0 | 65.0 | 65.0 |
| | Dough improving agent 1 | - | 0.2 | - | - |
| | Dough improving agent 2 | - | - | 1.0 | 2.0 |

The materials shown in Table 3, except shortening, were mixed together for two minutes at a low speed and for six minutes at a medium speed, and thereafter their mixture and the shortening were mixed together for three minutes at a low speed, for six minutes at a medium speed and for two minutes at a high speed. A kneading temperature was 2B°C. The resulting mixture was left to stand for a floor time of 40 minutes at 30°C, was degassed, was divided and was left to stand for a bench time of 25 minutes at room temperature. It was put in a mold, allowed to undergo 60 minutes of final proofing at 38°C (in a bread prover) and baked at 210°C for 35 minutes to make bread.

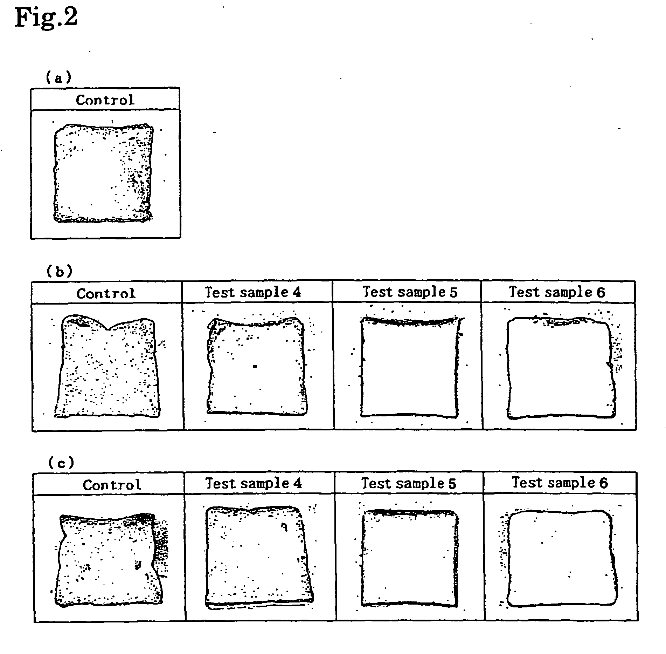

Each sample as obtained was tested and evaluated in accordance with the same conditions and standards as in Example 1. The results were as shown in Table 4. Fig. 2A shows the state of the bread slice made from the same materials as Control Sample and sliced after it had been left to stand overnight after baking, Fig. 2B shows each sample as sliced 60 minutes after baking, and Fig. 2C shows each sample as left to stand for one day after slicing.

As is obvious from Table 4 and Fig. 2, the bread made by using the dough improving agent of this invention did not have any undesirable warping, but was outstanding in shape retention and mechanical resistance, even if it had been sliced while still containing heat and water vapor, as in the case of Example 1. It was also confirmed that the dough improving agent of this invention can give bread of an improved mouthfeel.

**Table 4**

| | Warping - Breakdown (Immediately after slicing) | Warping - Breakdown (one day after slicing) | Soft feel | Melting In the mouth |
|---|---|---|---|---|
| Control sample | Δ | × | 0.00 | 0.00 |
| Test sample 4 | ○ | ○ | 0.70 | 0.25 |
| Test sample 5 | Ⓞ | Ⓞ | 1.50 | 0.25 |
| Test sample 6 | Ⓞ | Ⓞ | 0.38 | 0.13 |

### EXAMPLE 3

Bread having a soft baked body was made as in the case of Example 2, and thinly sliced for sandwiches.

**Table 5**

| (Bakers %) | | | |
|---|---|---|---|
| | Materials | Control sample | Test sample 7 |
| Materials | Hard flour | 90.0 | 90.0 |
| | Starch | 10.0 | 10.0 |
| | Sugar | 5.0 | 5.0 |
| | Salt | 2.0 | 2.0 |
| | Skim milk | 2.0 | 2.0 |
| | Yeasty food | 0.1 | 0.1 |
| | Shortening | 5.0 | 5.0 |
| | Dry yeast | 1.5 | 1.5 |
| | Water | 65.0 | 65.0 |
| | Dough improving agent 3 | - | 2.0 |

The materials shown in Table 5, except shortening, were mixed together for two minutes at a low speed and for six minutes at a medium speed, and thereafter their mixture and the shortening were mixed together for three minutes at a low speed, for six minutes at a medium speed and for two minutes at a high speed. A kneading temperature was 28°C. The resulting mixture was left to stand for a floor time of 40 minutes at 30°C, degassed, divided and left to stand for a bench time of 25 minutes at room temperature. It was put in a mold, allowed to undergo 60 minutes of final proofing at 38°C (in a bread prover) and baked at 210°C for 35 minutes to make bread.

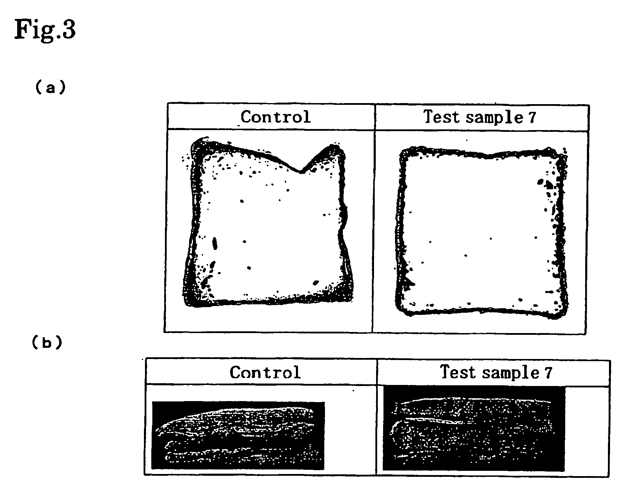

The baked bread was left to stand for 60 minutes. Then, bread was cut into slices each having a thickness of about 1.0 cm to prepare bread for sandwiches, and was evaluated in accordance with the same standards as in Example 1. Each bread as sliced showed the state as shown in Fig. 3A. Fig. 3B shows the state of sandwich made by using each sliced sample. Each sample was evaluated in four grades as explained below, and the results were as shown in Table 6.
- Ⓞ:: No crushing or deformation was observed.
- ○:: Hardly any crushing or deformation was observed.
- Δ:: Some crushing or deformation was observed.
- ×:: Serious crushing or deformation was observed.

As is obvious from Table 6 and Figs. 3 and 4, the bread made by using the dough improving agent of this invention did not have any undesirable warping, even if it had been sliced for sandwiches while still containing heat and water vapor, as in the case of Example 1 or 2. It was not crushed or deformed by crust cutting or by cutting after cooking. Thus, it was confirmed that the dough improving agent of this invention can provide bread with high shape retention and mechanical resistance for sandwiches.

**Table 6**

| | Warping - Breakdown (immediately after slicing) | Warping - Breakdown (during sandwich. making) | Soft feel | Melting In the mouth |
|---|---|---|---|---|
| Control sample | × | × | 0.00 | 0.00 |
| Test sample 7 | Ⓞ | Ⓞ | 0.88 | 0.65 |

### EXAMPLE 4

Raw bread crumb was made and compared for crushing.

**Table 7**

| (Bakers %) | | | | | | | | |
|---|---|---|---|---|---|---|---|---|
| | Materials | Control Sample 1 | Control Sample 2 | Control Sample 3 | Control Sample 4 | Control Sample 5 | Test Sample 14 | Test Sample 15 |
| Materials | Hard flour | 100.0 | 100.0 | 100.0 | 100.0 | 100.0 | 100.0 | 100.0 |
| | Sugar | 2.0 | 2.0 | 2.0 | 2.0 | 2.0 | 2.0 | 2.0 |
| | Salt | 1.0 | 1.0 | 1.0 | 1.0 | 1.0 | 1.0 | 1.0 |
| | Yeasty food | 0.1 | 0.1 | 0.1 | 0.1 | 0.1 | 0.1 | 0.1 |
| | Shortening | 4.0 | 4.0 | 4.0 | 4.0 | 4.0 | 4.0 | 4.0 |
| | Dry yeast | 1.6 | 1.5 | 1.5 | 1.5 | 1.5 | 1.5 | 1.5 |
| | Water | 65.0 | 65.0 | 65.0 | 65.0 | 65.0 | 65.0 | 65.0 |
| | Dough Improving agent 1 | - | - | - | - | - | 0.2 | 0.3 |
| | Pectin | - | 0.2 | 0.5 | - | - | - | - |
| | Guar gum | - | - | - | 0.2 | 0.4 | - | - |

The materials shown in Table 7, except shortening, were mixed together for three minutes at a low speed, for three minutes at a medium speed and for one minute at a high speed, and thereafter their mixture and the shortening were mixed together for two minutes at a low speed, for four minutes at a medium speed and for one minute at a high speed. A kneading temperature was 27°C. The resulting mixture was left to stand for a floor time of 70 minutes at 30°C, degassed, divided and left to stand for a bench time of 20 minutes at room temperature. It was put in a mold, allowed to undergo 60 minutes of final proofing at 38°C (in a bread prover) and baked at 210°C for 40 minutes to make bread for crumb. It was kept in a refrigerator overnight, and after it was left to stand for one hour in a vessel having a constant temperature of 25°C the following day, it was cut into slices having a thickness of 2.5 cm and then into small cubes, and the cubes were subjected to three seconds of crushing by a mixer to make raw bread crumb.

Eight grams of each sample crumb was put in a 100 ml syringe having one end cutaway compressed by a piston. After 60 seconds, the crumb was slowly pushed out of the syringe and examined for its cohering degree as indicated by its volume to which it had been compressible without forming a cohering mass. The results were as shown in Table 12. The greater the cohering degree is, bread crumb easily crushed and shows bad scattering.

It was confirmed by the results of Test Samples 14 and 15 that the raw bread crumb according to this invention was improved against crushing and cohesion, while all of Control Samples 1 to 5 were easily crushed by compression into a cohering mass. Thus, it was confirmed that the dough improving agent of this invention can provide bread for raw bread crumb of high quality not easily to crush or crushing cohere.

**Table 8**

| | Cohering degree (ml) |
|---|---|
| Control Sample 1 | 25 |
| Control Sample 2 | 20 |
| Control Sample 3 | 25 |
| Control Sample 4 | 25 |
| Control Sample 5 | 25 |
| Test Sample 14 | 10 |
| Test Sample 15 | 10 |

The bread and doughnuts according to this invention do not have their commercial value lowered due to crushing in a cut section, or warping or breaking, even if they are sliced or cut or otherwise processed shortly after baking or frying.

Moreover, the raw bread crumb according to this invention can effectively be used to make crispy fried food for which there is also a strong liking, as it is not easily crushed to lower the commercial value of the food. Thus, this invention makes it possible to shorten the process time required for the production of bread and doughnuts and reduce product loss.

The foregoing description of preferred embodiments of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated.

## Claims

1. A method of manufacturing sliced or cut bread or doughnuts which are not crushed bent or broken when sliced or cut comprising the steps of preparing a dough comprising an alginic ester in an amount of at least 0.01% by weight relative to flour, baking or frying the dough to produce bread or doughnuts and slicing or cutting the bread or doughnuts within 120 minutes after the baking or frying.

2. The method according to claim 1,**characterized in that** the alginic ester is present in the dough in an amount of 0.01 to 50 % by weight relative to flour.

3. The method according to claim 2, **characterized in that** the alginic ester is present in the dough in an amount of 0.10 to 10 % by weight relative to flour.

4. The method according to claim 3, wherein the alginic acid ester has a viscosity of 1.0 to 1000.0 mPa·s as measured in a 1% solution at 20°C by a B type viscometer.

5. The method according to claim 4, wherein the alginic acid ester has a viscosity of 3.0 to 600.0 mPa·s was measured in a 1% solution at 20°C by a B type viscometer.

6. The method according to any one of claims 1 to 5, wherein the dough further comprises at least one constituent selected from the group consisting of polysaccharides, saccharides, fibers, starches, proteins, dairy products, calcium-containing agents, pH adjustors, emulsifiers and enzyme.

7. The method according to any one of claims 1 to 6, wherein the bread or doughnuts is sliced or cut within 60 minutes after baking or frying

8. Use of an alginic acid ester for manufacturing sliced or cut bread or doughnuts which are not crushed bent or broken when sliced or cut within 120 minutes after baking or frying.

9. Use according to claim 8, wherein the alginic acid ester has a viscosity of 1.0 to 1000.0 mPa·s as measured in a 1% solution at 20°C by a B type viscometer.

10. Use according to claim 9, wherein the alginic acid ester has a viscosity of 3.0 to 600.0 mPa·s as measured in a 1% solution at 20°C by a B type viscometer.

11. Use according to any one of claims 8 to 10, wherein the dough further comprises at least one constituent selected from the group consisting of polysaccharides, saccharides, fibers, starches, proteins, diary products, calcium-containing agents, pH adjustors, emulsifiers and enzymes.

## Patentansprüche

1. Verfahren zur Herstellung von aufgeschnittenem oder angeschnittenem Brot oder Donuts, die beim Schneiden oder Anschneiden nicht zerbrechen oder verformt werden umfassend die Schritte: Zubereiten eines Teigs, der einen Alginsäureester in einem Anteil von wenigstens 0.01 Gew.-% bezogen auf das Mehl enthält; Backen oder Braten des Teigs, um das Brot oder die Donuts herzustellen; Anschneiden oder Schneiden des Brots oder der Donuts innerhalb von 120 Minuten nach dem Backen oder Braten.

2. Verfahren nach Anspruch 1, **dadurch gekennzeichnet, dass** der Alginsäureester in einem Anteil von 0.01 bis 50 Gew.-% bezogen auf das Mehl zugegen ist.

3. Verfahren nach Anspruch 2, **dadurch gekennzeichnet, dass** der Alginsäureester in einem Anteil von 0.01 bis 10 Gew.-% bezogen auf das Mehl zugegen ist.

4. Verfahren nach Anspruch 3, worin der Alginsäureester eine Viskosität von 1,0 bis 1000,0 mPa·s aufweist, gemessen in einer 1 %-igen Lösung bei 20 °C mit einem B-Typ Viskosimeter.

5. Verfahren nach Anspruch 4, worin der Alginsäureester eine Viskosität von 3,0 bis 600,0 mPa·s aufweist, gemessen in einer 1 %-igen Lösung bei 20 °C mit einem B-Typ Viskosimeter.

6. Verfahren nach einem der Ansprüche 1 bis 5, worin der Teig weiterhin wenigstens einen Bestandteil ausgewählt aus der Gruppe bestehend aus Polysacchariden, Sacchariden, Ballaststoffen, Proteinen, Stärken, Molkereiprodukten, Kalzium-enthaltende Agenzien, pH-Regulatoren, Emulgatoren und Enzymen, enthält.

7. Verfahren nach einem der Ansprüche 1 bis 6, worin das Brot oder die Donuts innerhalb von 60 Minuten nach dem Backen oder Braten geschnitten oder angeschnitten werden.

8. Verwendung von Alginsäureestern zur Herstellung von aufgeschnittenem oder angeschnittenem Brot oder Donuts, die beim Schneiden oder Anschneiden nicht zerbrechen oder verformt werden, wenn sie innerhalb von 120 Minuten nach dem Backen oder Braten geschnitten oder angeschnitten werden

9. Verwendung nach Anspruch 8, wobei der Alginsäureester eine Viskosität von 1,0 bis 1000 mPa·s aufweist, gemessen in einer 1 %-igen Lösung bei 20 °C mit einem B-Typ Viskosimeter.

10. Verwendung nach Anspruch 9, wobei der Alginsäureester, eine Viskosität von 3,0 bis 600,0 mPa·s aufweist, gemessen in einer 1 %-igen Lösung bei 20 °C mit einem B-Typ Viskosimeter.

11. Verwendung nach einem der Ansprüche 8 bis 10, wobei der Teig weiterhin wenigstens einen Bestandteil ausgewählt aus der Gruppe bestehend aus Polysacchariden, Sacchariden, Ballaststoffen, Proteinen, Stärken, Molkereiprodukten, Kalzium-enthaltende Agenzien, pH-Regulatoren, Emulgatoren und Enzymen, enthält.

## Revendications

1. Procédé de fabrication de pain ou beignets tranchés ou découpés, qui ne s'écrasent pas ou ne se brisent pas quand ils sont tranchés ou découpés, ledit procédé comprenant les étapes de préparation d'une pâte comprenant un ester alginique en une quantité d'au moins 0,01% en poids par rapport à la farine, de cuisson au four ou de friture de la pâte afin de produire du pain ou des beignets et de tranchage ou de découpe du pain ou des beignets dans les 120 minutes après la cuisson au four ou friture.

2. Procédé selon la revendication 1, **caractérisé en ce que** l'ester alginique est présent dans la pâte en une quantité comprise entre 0,01 et 50% en poids par rapport à la farine.

3. Procédé selon la revendication 2, **caractérisé en ce que** l'ester alginique est présent dans la pâte en une quantité comprise entre 0,10 et 10% en poids par rapport à la farine.

4. Procédé selon la revendication 3, dans lequel l'ester d'acide alginique a une viscosité comprise entre 1,0 et 1000,0 mPa.s telle que mesurée, à 20°C, sur une solution à 1% au moyen d'un viscosimètre de type B.

5. Procédé selon la revendication 4, dans lequel l'ester d'acide alginique a une viscosité comprise entre 3,0 et 600,0 mPa.s telle que mesurée, à 20°C, sur une solution à 1% au moyen d'un viscosimètre de type B.

6. Procédé selon l'une quelconque des revendications 1 à 5, dans lequel la pâte comprend, en outre, au moins un constituant sélectionné dans le groupe consistant en les polysaccharides, les saccharides, les fibres, les amidons, les protéines, les produits laitiers, les agents contenant du calcium, les ajusteurs de pH, les émulsifiants et les enzymes.

7. Procédé selon l'une quelconque des revendications 1 à 6, dans lequel le pain ou les beignets sont tranchés ou découpés dans les 60 minutes après la cuisson au four ou friture.

8. Utilisation d'un ester d'acide alginique pour la fabrication de pain ou beignets tranchés ou découpés, qui ne s'écrasent pas ou ne se brisent pas quand ils sont tranchés ou découpés dans les 120 minutes après la cuisson au four ou friture.

9. Utilisation selon la revendication 8, dans laquelle l'ester d'acide alginique a une viscosité comprise entre 1,0 et 1000,0 mPa.s telle que mesurée, à 20°C, sur une solution à 1% au moyen d'un viscosimètre de type B.

10. Utilisation selon la revendication 9, dans laquelle l'ester d'acide alginique a une viscosité comprise entre 3,0 et 600,0 mPa.s telle que mesurée, à 20°C, sur une solution à 1% au moyen d'un viscosimètre de type B.

11. Utilisation selon l'une quelconque des revendications 8 à 10, dans laquelle la pâte comprend, en outre, au moins un constituant sélectionné dans le groupe consistant en les polysaccharides, les saccharides, les fibres, les amidons, les protéines, les produits laitiers, les agents contenant du calcium, les ajusteurs de pH, les émulsifiants et les enzymes.
